# FASCICULE DE BREVET EUROPEEN

(11) **EP 4 034 754 B1**
(45) Date de publication et mention de la délivrance du brevet: **12.06.2024**
(21) Numéro de dépôt: 20793019.9
(22) Date de dépôt: 25.09.2020
(51) Int. Cl.: F01D 9/06

(54) **TURBOMACHINE D'AERONEF AVEC UN BRAS TUBULAIRE DE PASSAGE D'UNE CONDUITE D'HUILE DE LUBRIFICATION**
FLUGZEUGTURBINENTRIEBWERK MIT EINEM ROHRFÖRMIGEN ARM ZUR DURCHFÜHRUNG EINER SCHMIERÖLLEITUNG
AIRCRAFT TURBINE ENGINE WITH A TUBULAR ARM FOR THE PASSAGE OF A LUBRICATING OIL LINE

(30) Priorité: 27.09.2019 FR 1910693
(43) Date de publication de la demande: 03.08.2022
(73) Titulaire: SAFRAN AIRCRAFT ENGINES, 75015 Paris (FR)
(72) Inventeur: SERVANT, Régis Eugène Henri, 77550 MOISSY-CRAMAYEL (FR); DESOMBRE, Didier Gabriel Bertrand, 77550 MOISSY-CRAMAYEL (FR); JACQUEMARD, Christophe Paul, 77550 MOISSY-CRAMAYEL (FR)
(74) Mandataire: Gevers & Orès
(86) Numéro de dépôt international: PCT/FR2020/000243
(87) Numéro de publication internationale: WO 2021/058882

(56) Documents cités:
- EP-A2- 1 378 632
- WO-A1-2013/162982
- FR-A1- 3 014 478
- FR-A1- 3 036 437
- FR-A1- 3 041 686
- FR-A1- 3 053 387

## Description

### Domaine technique de l'invention

La présente invention se rapporte au domaine de l'aéronautique, et plus particulièrement à une turbomachine pour un aéronef.

### Arrière-plan technique

L'arrière-plan technique comprend notamment les documents FR-A1-3 041 686, FR-A1-3 014 478, WO-A1-2013/162982, FR-A1-3 053 387, FR-A1-3 036 437 et EP-A2-1 378 632.

Il est connu des turbomachines à double flux. De telles turbomachines comportent une ou plusieurs soufflantes et un générateur de gaz lequel comprend généralement, d'amont en aval dans le sens de l'écoulement des gaz, un ensemble de compresseurs, une chambre de combustion, ainsi qu'un ensemble de turbines. Une tuyère d'échappement des gaz est agencée en aval du générateur de gaz. La ou les soufflante(s) sont entraînées en rotation par une ou plusieurs turbines par l'intermédiaire d'un dispositif de transmission mécanique, lequel comporte généralement un réducteur, aussi appelé dispositif RGB (de l'anglais « Réduction Gearbox »). Un système de passage de servitudes, comprenant notamment des conduits d'alimentations en huile, est également prévu de façon à ce que les servitudes puissent traverser une veine, telle qu'une veine d'écoulement d'un flux d'air entrant dans la partie moteur, en minimisant les perturbations de cet écoulement. Ce système de passage de servitudes permet de relier un premier équipement situé radialement vers l'intérieur de la veine à un second équipement situé radialement vers l'extérieur de celle-ci. Le système de passage de servitudes comprend en général un carter structural.

Pour permettre d'accommoder les désalignements statiques, dynamiques et thermiques entre les différentes pièces de la turbomachine, le réducteur est généralement fixé au carter à l'aide d'un support souple. Pendant le fonctionnement de la turbomachine, le réducteur peut donc se déplacer dans toutes les directions de plusieurs millimètres par rapport au carter, et il engendre également des vibrations.

Ces contraintes rendent alors difficile la conception des alimentations ou servitudes d'huile de lubrification du réducteur, plus particulièrement au niveau des portées d'étanchéité. En règle générale, les servitudes d'huile sont en effet réalisées par des tubes portant des joints toriques à leurs extrémités et venant réaliser le transfert d'huile entres deux pièces. Toutefois, si une telle configuration fonctionne très bien dans le cas de deux pièces statiques ou quasi statiques, l'étanchéité de l'ensemble se dégrade fortement lorsqu'il existe des mouvements ou des vibrations relatif(ve)s entre les pièces, car les joints toriques ne sont pas adaptés pour fonctionner correctement avec ce type de contraintes. En effet de tels joints toriques, statiques, ne sont pas efficaces lorsqu'il existe un désalignement important entre les pièces qu'ils doivent étancher, notamment un désalignement de l'ordre d'un degré. Des joints dynamiques sont connus mais, s'ils acceptent un faux-rond raisonnable, ces derniers ne tolèrent pas non plus de désalignement entre les pièces. Ils sont de plus très difficiles à monter car ils font généralement l'objet d'un montage en force, au maillet.

Il existe en outre des solutions basées sur des rotules dites étanches. Toutefois, l'étanchéité de ces rotules permet uniquement de conserver à l'intérieur des rotules la graisse qui sert à leur lubrification. De telles rotules sont alors inefficientes pour assurer l'étanchéité de l'ensemble sous la pression d'un circuit hydraulique notamment.

Une solution connue pour supporter des déplacements relatifs entre les pièces, que ce soit en désalignement ou en écartement, consiste à réaliser des portées sphériques sur les embouts du tube acheminant l'huile, de part et d'autre du joint. En fonctionnement, seul le joint peut amortir les contacts métal-métal entre le tube et les orifices hydrauliques ménagés dans les pièces. Le joint ne peut toutefois empêcher de tels contacts métal-métal, surtout lorsqu'il se tasse sous l'effet de la compression. Les contacts métal-métal endommagent alors la portée du joint et ce dernier se met à fuir, ce qui est très préjudiciable à l'efficacité et à la fiabilité de l'ensemble. Les phénomènes vibratoires dans le système accélèrent en outre cette usure.

Ainsi, et comme il n'est généralement pas autorisé d'utiliser des canalisations souples à l'intérieur des enceintes d'un moteur (risque de pollution, d'endommagement des roulements ou des engrenages si les canalisations se dégradent), il existe donc un besoin de concevoir des canalisations d'huile rigides et étanches, et compatibles de déplacements relatifs entre les pièces, que ce soit en désalignement ou en écartement.

La présente invention a notamment pour but de résoudre tout ou partie des problèmes précités.

### Résumé de l'invention

L'invention propose à cet effet une turbomachine d'aéronef, comportant un générateur de gaz comprenant au moins une veine annulaire d'écoulement de gaz, la veine étant délimitée par deux carters annulaires, respectivement externe et interne, s'étendant l'un autour de l'autre et reliés entre eux par au moins un bras tubulaire de passage d'une conduite d'huile de lubrification.

Selon l'invention, la conduite comprend un premier tronçon fixe solidaire du carter externe, un second tronçon fixe solidaire d'un équipement de la turbomachine susceptible de se déplacer ou de vibrer en fonctionnement par rapport auxdits carters, et un tronçon intermédiaire de liaison desdits premier et second tronçons, ce tronçon intermédiaire ayant une forme générale allongée et comportant des extrémités longitudinales opposées qui sont chacune engagées et aptes à rotuler et/ou à coulisser dans des extrémités desdits premier et second tronçons.

Dans la présente demande, on entend par « tronçon » d'une conduite, une portion de la conduite qui comprend elle-même une surface interne délimitant une veine de circulation de l'huile à l'intérieur de la conduite. On comprend donc que les tronçons d'une conduite s'étendent les uns à la suite des autres et sont disposés sensiblement bout à bout et raccordés les uns aux autres ou emmanchés les uns dans les autres. Ce raccordement ou cet emmanchement permet avantageusement un rotulage et/ou un coulissement des tronçons les uns par rapport aux autres.

Ainsi, l'invention permet de fournir une conduite d'huile rigide pour une turbomachine, et autorisant des déplacements relatifs entre les pièces qu'elle relie (que ce soit en désalignement ou en écartement), et ce sans préjudice de l'étanchéité globale de l'ensemble. En effet, grâce aux extrémités longitudinales du tronçon intermédiaire de la conduite d'huile, qui sont engagées et aptes à rotuler et/ou à coulisser dans des extrémités des premier et second tronçons de la conduite, cette dernière peut suivre les mouvements d'une pièce en déplacement relatif par rapport au carter structural. Cette pièce peut notamment être un réducteur, sans que cela ne soit limitatif dans le cadre de la présente invention.

En outre, une telle configuration de la conduite d'huile permet d'assurer l'étanchéité globale du système, et ce quel que soit le mouvement relatif entre les pièces. Les contacts métal-métal sont entre les pièces sont avantageusement évités, prévenant ainsi l'usure préjudiciable à la durée de vie des étanchéités. La fiabilité de l'ensemble est améliorée, et les besoins de maintenance réduits.

Enfin, une telle configuration de la conduite d'huile est particulièrement compacte et donc facilement intégrable au sein de la turbomachine.

La turbomachine selon l'invention peut comprendre une ou plusieurs des caractéristiques ci-dessous, prises isolément les unes avec les autres ou en combinaison les unes avec les autres :
- l'équipement est un réducteur mécanique ;
- le réducteur comprend un stator auquel est fixé le second tronçon ;
- le stator du réducteur est relié au carter interne par un organe élastiquement déformable ;
- chacune des extrémités longitudinales du tronçon intermédiaire comprend une surface cylindrique externe sur laquelle est montée coulissante une bague interne présentant un contour externe sphérique apte à coopérer avec une bague externe portée par le tronçon fixe correspondant ;
- la surface cylindrique comprend au moins une gorge annulaire de réception d'un segment annulaire de guidage et/ou au moins une gorge annulaire de réception d'un joint annulaire d'étanchéité ;
- la bague externe comprend une première partie annulaire frettée dans une extrémité du tronçon fixe et une seconde partie annulaire rapportée dans cette extrémité ;
- un joint annulaire d'étanchéité est intercalé entre lesdites première et seconde parties ;
- ladite seconde partie comprend un rebord annulaire externe d'appui sur un épaulement cylindrique de l'extrémité du tronçon fixe, par l'intermédiaire d'une cale annulaire de réglage ; et
- un écrou, éventuellement associé à un dispositif de verrouillage, est vissé dans l'extrémité du tronçon fixe et prend appui axialement sur la seconde partie.

### Brèves description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique partielle en coupe longitudinale d'une turbomachine selon l'invention ;
[Fig.2] la figure 2 est une vue agrandie d'un détail de réalisation de la turbomachine de la figure 1, illustrant un système de rotule installé dans un carter structural de la turbomachine ;
[Fig.3] la figure 3 est une vue agrandie d'un détail de réalisation de la turbomachine de la figure 1, illustrant un autre système de rotule installé dans une pièce d'un réducteur de la turbomachine ; et
[Fig.4] la figure 4 est une vue analogue à celle de la figure 3, illustrant le fonctionnement du système de rotule lorsque le tube de transfert d'huile se désaligne par rapport à la pièce réceptrice du système de rotule.

### Description détaillée de l'invention

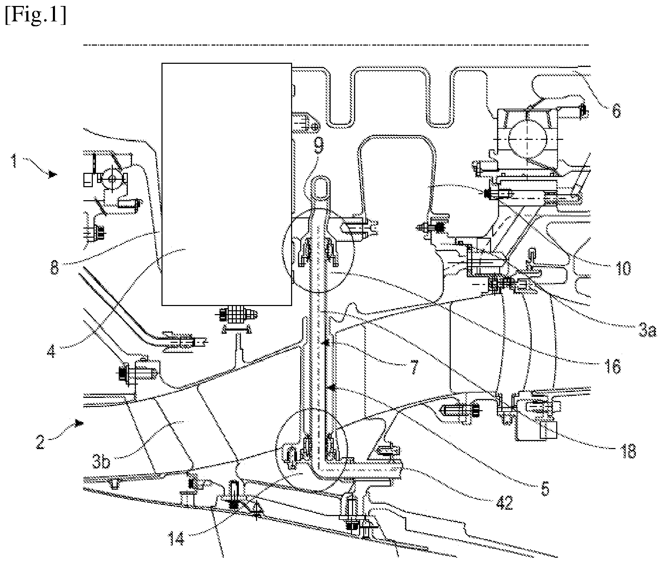

Sur la figure 1 et dans la suite de la description est représentée une turbomachine double flux 1 destinée à équiper un aéronef. Cependant, l'invention peut s'appliquer de la même manière à d'autres types de turbomachines.

La turbomachine 1 comprend généralement, d'amont en aval dans le sens de l'écoulement des gaz, une ou plusieurs soufflantes puis une partie moteur comprenant un ou plusieurs étage(s) de compresseurs, une chambre de combustion, et un ou plusieurs étage(s) de turbines. Les soufflantes, les compresseurs, la chambre de combustion et les turbines ne sont pas représentés sur les figures pour des raisons de clarté. Une veine annulaire 2 d'écoulement de gaz permet d'alimenter en air la partie moteur. Une tuyère (non représentée) est également disposée en aval pour permettre l'échappement des gaz. La ou les soufflante(s) sont entraînées en rotation par une ou plusieurs des turbines par l'intermédiaire d'un dispositif de transmission mécanique, lequel comporte un réducteur 4. Comme visible sur la figure 1, le réducteur 4 présente un arbre d'entrée 6, ainsi qu'un arbre de sortie 8 relié à la ou aux soufflantes.

La veine 2 permet la circulation d'un flux d'air entrant dans un circuit primaire correspondant à la partie moteur. La veine 2 est délimitée par deux carters annulaires, respectivement un carter interne 3a et un carter externe 3b, s'étendant l'un autour de l'autre et reliés entre eux par au moins un bras tubulaire 5 de passage d'une conduite 7 d'huile de lubrification. Ce système de passage de servitudes, comprenant le bras tubulaire 5 et la conduite 7, permet de relier un premier équipement situé radialement vers l'extérieur de la veine 2 à un second équipement situé radialement vers l'intérieur de celle-ci (l'expression radialement s'appréciant par rapport à l'axe longitudinal de la turbomachine). Dans le présent exemple, le premier équipement est un circuit d'alimentation en huile de lubrification (non représenté), et le second équipement est une pièce 9 assurant le circuit de lubrification du réducteur 4.

Le réducteur 4 est susceptible de se déplacer ou de vibrer en fonctionnement par rapport aux carters 3a, 3b. Dans le présent exemple, le réducteur 4 est relié au carter interne 3a par le biais d'un organe élastiquement déformable 10. Plus précisément, le réducteur 4 comporte un stator, lequel est relié au carter interne 3a via l'organe élastiquement déformable 10. L'organe élastiquement déformable 10 est par exemple un support souple.

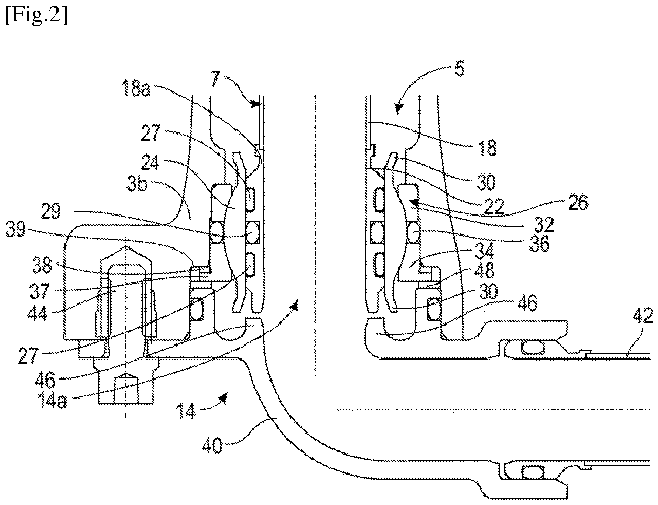

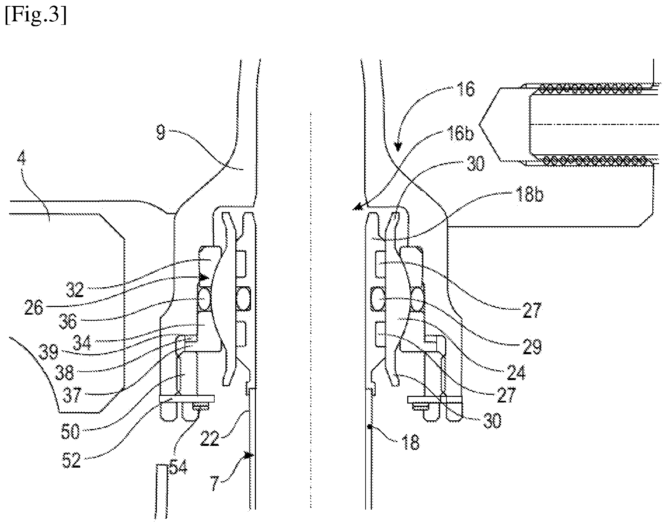

La conduite 7 d'huile de lubrification comprend un premier tronçon fixe 14, un second tronçon fixe 16, et un tronçon intermédiaire 18 de liaison des premier et second tronçons 14, 16. Comme visible sur la figure 1, le premier tronçon fixe 14 est solidaire du carter externe 3b, et le second tronçon fixe 16 est solidaire du réducteur 4. Dans le présent exemple, le second tronçon 16 est fixé au stator du réducteur 4, plus particulièrement à la pièce 9 assurant la lubrification du réducteur, laquelle pièce 9 appartient au stator. En référence aux figures 2 et 3, le tronçon intermédiaire 18 présente une forme générale allongée et comporte deux extrémités longitudinales 18a, 18b engagées et aptes à rotuler et/ou coulisser dans des extrémités correspondantes 14a, 16b des premier et second tronçons 14, 16. Une première extrémité longitudinale 18a du tronçon intermédiaire 18, visible sur la figure 2 et agencée au droit du bras 5, est ainsi engagée et apte à rotuler et/ou coulisser dans une extrémité correspondante 14a du premier tronçon 14. Une seconde extrémité longitudinale 18b du tronçon intermédiaire 18, visible sur la figure 3, est quant à elle engagée et apte à rotuler et/ou coulisser dans une extrémité correspondante 16b du second tronçon 16.

Chacune de ces extrémités longitudinales opposées 18a, 18b du tronçon intermédiaire 18 comprend une surface cylindrique externe 22 sur laquelle est montée coulissante une bague interne 24. La bague interne 24 présente un contour externe sphérique apte à coopérer avec une bague externe 26 portée par le tronçon fixe 14, 16 correspondant, formant ainsi un système de rotule.

La surface cylindrique externe 22 de chaque extrémité longitudinale 18a, 18b comprend au moins une gorge annulaire de réception d'un segment annulaire de guidage 27 et/ou au moins une gorge annulaire de réception d'un joint annulaire d'étanchéité 29. Dans le présent exemple illustré sur les figures 2 et 3, la surface cylindrique 22 comprend deux gorges annulaires de réception d'un segment annulaire de guidage 27, et une gorge annulaire de réception d'un joint annulaire d'étanchéité 29. Dans le présent exemple, pour chaque extrémité longitudinale 18a, 18b, le joint annulaire d'étanchéité 29 est agencé entre les deux segments de guidage 27 présents sur cette extrémité. Le joint annulaire 29 est par exemple un joint torique. En variante non représentée, le joint annulaire 29 peut être formé par une garniture d'étanchéité plus élaborée qu'un joint torique, telle qu'un joint associé à une bague de frottement par exemple.

Les deux segments de guidage 27 présents sur chaque extrémité 18a, 18b permettent de prévenir l'usure par contact métal-métal entre la conduite d'huile 7 et les bagues internes 24, empêchant ainsi l'apparition de fuites. Les segments de guidage 27 forcent en outre les systèmes de rotules à s'aligner avec la conduite d'huile 7 lorsqu'elle bouge. Ils permettent également de contrôler l'écrasement du joint annulaire 29, tout cela au bénéfice de la durée de vie et de l'efficacité de l'étanchéité. Les segments de guidage 27 permettent également de mieux résister aux sollicitations vibratoires engendrées par le réducteur 4.

Afin de faciliter le montage et de ne pas endommager les segments de guidage 27 et les joints annulaires d'étanchéité 29, la bague interne 24 montée sur la première extrémité longitudinale 18a du tronçon intermédiaire 18 est équipée d'un chanfrein 30 à chacune de ses extrémités. En effet, lors du démontage de la conduite d'huile 7, les segments de guidage 27 et le joint annulaire 29 de la seconde extrémité longitudinale 18b côté réducteur, vont devoir être re-comprimés pour traverser la bague interne 24 montée sur la première extrémité 18a côté carter externe. Pour un gain de coût, et même si cela n'est pas utile au montage de la conduite d'huile 7 à proprement parler, la bague interne 24 montée sur la seconde extrémité longitudinale 18b du tronçon intermédiaire 18 comporte également ces deux chanfreins d'entrée 30. Ainsi, ce sont exactement les mêmes pièces 24 qui forment parties des systèmes de rotules disposés côté carter externe 3b et côté réducteur 4.

De préférence, la bague externe 26 comprend une première partie annulaire 32 frettée dans une extrémité 14a, 16b du tronçon fixe 14, 16 correspondant ; et une seconde partie annulaire 34 rapportée dans cette extrémité 14a, 16b. Un joint annulaire d'étanchéité 36 est intercalé entre les première et seconde parties annulaires 32, 34 de chaque bague externe 26. Une telle configuration pour les systèmes de rotules, associant une bague interne 24 à contour externe sphérique, et une bague externe 26 en deux parties 32, 34, permet d'assurer l'étanchéité des systèmes et de garantir que ces derniers résistent à la pression du circuit d'alimentation d'huile.

La seconde partie annulaire 34 de chaque bague externe 26 comprend un rebord annulaire externe 37 d'appui sur un épaulement cylindrique 39 de l'extrémité 14a, 16b du tronçon fixe 14, 16 correspondant, par l'intermédiaire d'une cale annulaire de réglage 38. Une telle cale 38, dont l'épaisseur est réglable, permet de maîtriser le jeu ou serrage de fonctionnement entre la bague interne 24 et les parties annulaires 32, 34 de la bague externe 26 (selon les recommandations du fabricant de ces bagues), et d'ainsi garantir que le système de rotule fonctionne dans des conditions optimales.

Le joint annulaire 36 est par exemple un joint torique. En variante non représentée, le joint annulaire 36 peut être formé par une garniture d'étanchéité plus élaborée qu'un joint torique, telle qu'un joint associé à une bague de frottement par exemple.

Au montage, la première partie annulaire 32 de chaque bague externe 26 est montée frettée et en butée dans un alésage de la pièce réceptrice 3b, 9 correspondante. Puis la bague interne 24 est glissée au travers de la première partie annulaire 32. Ensuite le joint annulaire d'étanchéité 36 est mis en place. Pour finir, la deuxième partie annulaire 34 de la bague externe 26 est glissée autour de la bague interne 24 pour venir emprisonner le joint 36. Cette deuxième partie annulaire 34 peut être montée glissante, ou très légèrement serrée dans la pièce réceptrice 3b, 9. Le joint annulaire d'étanchéité 36 fonctionne alors dans des conditions proches de la normale. Seul le fait qu'il porte sur la sphère de la bague interne 24 diffère d'un montage habituel. La cale de réglage 38 est installée préalablement à la deuxième partie annulaire 34 de la bague externe 26 avant de finaliser le montage du système de rotule, et le réglage du couple de serrage est effectué via cette cale 38.

En référence à la figure 2, le premier tronçon fixe 14 comprend un couvercle 40 venant obturer l'orifice défini par la première extrémité longitudinale 18a du tronçon intermédiaire 18. Le couvercle 40 permet de maintenir en position, dans le carter externe 3b, le système de rotule 24, 26 correspondant. Le couvercle 40 vient en outre connecter le tronçon intermédiaire 18 de la conduite 7 avec un tube 42 d'alimentation en huile relié au circuit d'alimentation en huile. Le couvercle 40 est fixé au carter externe 3b, par exemple au moyen d'une ou plusieurs vis 44. Un tel montage avec couvercle 40 est particulièrement avantageux dans le cas où la pièce réceptrice ne peut pas être taraudée, ce qui est le cas du carter externe 3b. De préférence, et comme visible sur la figure 2, le couvercle 40 est muni d'au moins une butée 46, en l'occurrence de deux butées 46 s'étendant de part et d'autre de la conduite 7 dans le présent exemple. Les butées 46 sont configurées de manière à empêcher les segments de guidage 27 de sortir des bagues internes 24 des systèmes de rotules en limitant le déplacement radial de la conduite 7. Elles laissent cependant une course de déplacement suffisante pour permettre à la conduite d'huile 7 de s'accommoder des déplacements relatifs entre le réducteur 4 et les carters 3a, 3b, et des dilatations thermiques. A l'autre extrémité de la conduite 7, la géométrie de la pièce 9 fournit également une butée à la conduite 7.

Dans cette configuration particulière illustrée sur la figure 2, une contre cale annulaire 48 est insérée entre le couvercle 40 et le rebord annulaire externe 37 de la seconde partie annulaire 34 de la bague externe 26, du côté du rebord 37 opposé à celui au niveau duquel est agencé la cale de réglage 38. La contre cale 48, qui est réglable en épaisseur, permet de combler le jeu entre la bague externe 26 et le couvercle 40. Le système de rotule 24, 26, qui a déjà été préalablement réglé grâce à la cale de réglage 38, est ainsi efficacement plaqué via l'action de la contre cale 48.

En référence à la figure 3, un écrou 50 associé à un dispositif 52 de freinage et de verrouillage de l'écrou 50, est vissé dans l'extrémité correspondante 16b du second tronçon fixe 16. L'écrou 50 prend appui axialement sur la seconde partie annulaire 34 de la bague externe 26 de telle sorte que l'écrou 50, une fois serré, maintient en position dans la pièce 9 le système de rotule 24, 26 correspondant. Un anneau élastique 54 est avantageusement couplé au dispositif de freinage et de verrouillage 52 afin d'améliorer l'efficacité de l'ensemble.

Pour le montage de la conduite d'huile 7, une fois les deux systèmes de rotules installés dans les pièces réceptrices 3b, 9, la conduite 7 est installée entre eux. Pour ce faire, la conduite 7 est passée au travers du système de rotule installé dans le carter externe 3b. Puis elle est poussée à l'intérieur du bras tubulaire 5, pour venir s'engager dans le système de rotule installé dans la pièce 9 assurant la lubrification du réducteur 4. L'ensemble est enfermé par le montage du couvercle 40 et de la contre cale 48.

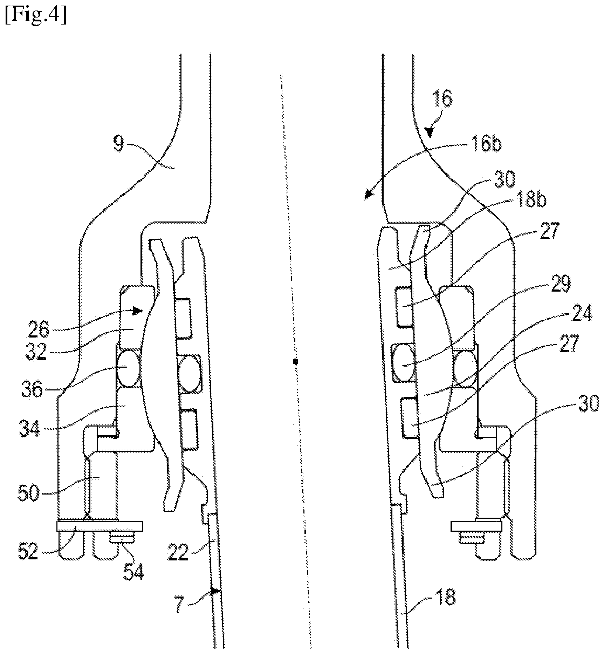

La figure 4 illustre le fonctionnement du système de rotule 24, 26 de la figure 3 lorsque la conduite d'huile 7 se désaligne par rapport à la pièce 9 réceptrice du système de rotule. Une fois installée entre les deux systèmes de rotules, la conduite d'huile 7 provoque la rotation de ces derniers, lorsque le réducteur 4 se déplace par rapport aux carters 3a, 3b. Les deux systèmes de rotule, connectés à la conduite 7, forment des orifices de connexion hydraulique rotulants et étanches. On conçoit ainsi que l'invention permet de fournir une conduite d'huile 7 rigide pour la turbomachine 1, et qui autorise des déplacements relatifs entre les pièces 3a, 9 qu'elle relie (que ce soit en désalignement ou en écartement), et ce sans préjudice de l'étanchéité globale de l'ensemble.

Bien que la présente invention ait été décrite en référence à un réducteur et à un carter structural d'une turbomachine, elle s'applique de la même manière à toute pièce d'une turbomachine requérant une alimentation en huile, avec présence de déplacements relatifs (que ce soit en désalignement ou en écartement) entre cette pièce et le carter structural.

## Revendications

1. Turbomachine (1) d'aéronef, comportant un générateur de gaz comprenant au moins une veine annulaire (2) d'écoulement de gaz, la veine (2) étant délimitée par deux carters annulaires, respectivement externe (3b) et interne (3a), s'étendant l'un autour de l'autre et reliés entre eux par au moins un bras tubulaire (5) de passage d'une conduite (7) d'huile de lubrification, **caractérisée en ce que** la conduite (7) comprend un premier tronçon fixe (14) solidaire du carter externe (3b), un second tronçon fixe (16) solidaire d'un équipement (4) de la turbomachine susceptible de se déplacer ou de vibrer en fonctionnement par rapport auxdits carters (3a, 3b), et un tronçon intermédiaire (18) de liaison desdits premier et second tronçons (14, 16), ce tronçon intermédiaire (18) ayant une forme générale allongée et comportant des extrémités longitudinales opposées (18a, 18b) qui sont chacune engagées et aptes à rotuler et/ou à coulisser dans des extrémités (14a, 16b) desdits premier et second tronçons (14, 16).

2. Turbomachine (1) selon la revendication 1, dans laquelle l'équipement (4) est un réducteur mécanique.

3. Turbomachine (1) selon la revendication 2, dans laquelle le réducteur (4) comprend un stator auquel est fixé le second tronçon (16).

4. Turbomachine (1) selon la revendication 3, dans laquelle le stator du réducteur (4) est relié au carter interne (3a) par un organe élastiquement déformable (10).

5. Turbomachine (1) selon l'une des revendications précédentes, dans laquelle chacune des extrémités longitudinales (18a, 18b) du tronçon intermédiaire (18) comprend une surface cylindrique externe (22) sur laquelle est montée coulissante une bague interne (24) présentant un contour externe sphérique apte à coopérer avec une bague externe (26) portée par le tronçon fixe (14, 16) correspondant.

6. Turbomachine (1) selon la revendication 5, dans laquelle la surface cylindrique (22) comprend au moins une gorge annulaire de réception d'un segment annulaire de guidage (27) et/ou au moins une gorge annulaire de réception d'un joint annulaire d'étanchéité (29).

7. Turbomachine (1) selon la revendication 5 ou 6, dans laquelle la bague externe (26) comprend une première partie annulaire (32) frettée dans une extrémité (14a, 16b) du tronçon fixe (14, 16) et une seconde partie annulaire (34) rapportée dans cette extrémité (14a, 16b).

8. Turbomachine (1) selon la revendication 7, dans laquelle un joint annulaire d'étanchéité (36) est intercalé entre lesdites première et seconde parties (32, 34).

9. Turbomachine (1) selon la revendication 7 ou 8, dans laquelle ladite seconde partie (34) comprend un rebord annulaire externe (37) d'appui sur un épaulement cylindrique (39) de l'extrémité (14a, 16b) du tronçon fixe (14, 16), par l'intermédiaire d'une cale annulaire de réglage (38).

10. Turbomachine (1) selon la revendication 9, dans laquelle un écrou (50), éventuellement associé à un dispositif de verrouillage (52), est vissé dans l'extrémité (16b) du tronçon fixe (16) et prend appui axialement sur la seconde partie (34).

## Patentansprüche

1. Flugzeugturbotriebwerk (1), umfassend einen Gasgenerator, der mindestens eine ringförmige Ader (2) zur Abführung von Gas umfasst, wobei die Ader (2) durch zwei ringförmige Gehäuse, ein äußeres (3b) bzw. ein inneres (3a), begrenzt wird, die sich umeinander erstrecken und durch mindestens einen rohrförmigen Arm (5) zur Durchführung einer Schmierölleitung (7) untereinander verbunden sind, **dadurch gekennzeichnet, dass** die Leitung (7) einen ersten festen Teilabschnitt (14), der mit dem äußeren Gehäuse (3b) fest verbunden ist, einen zweiten festen Teilabschnitt (16), der mit einer Ausrüstung (4) des Turbotriebwerks fest verbunden ist, die imstande ist, im Betrieb in Bezug auf die Gehäuse (3a, 3b) verschoben zu werden oder zu vibrieren, und einen mittleren Teilabschnitt (18) zur Verbindung des ersten und zweiten Teilabschnitts (14, 16) umfasst, wobei dieser mittlere Teilabschnitt (18) eine allgemeine längliche Form aufweist und gegenüberliegende Längsenden (18a, 18b) umfasst, die jeweils in Enden (14a, 16b) des ersten und zweiten Teilabschnitts (14, 16) eingreifen und geeignet sind, sich in diesen zu drehen und/oder zu gleiten.

2. Turbotriebwerk (1) nach Anspruch 1, wobei die Ausrüstung (4) ein mechanisches Untersetzungsgetriebe ist.

3. Turbotriebwerk (1) nach Anspruch 2, wobei das Untersetzungsgetriebe (4) einen Stator umfasst, an dem der zweite Teilabschnitt (16) befestigt ist.

4. Turbotriebwerk (1) nach Anspruch 3, wobei der Stator des Untersetzungsgetriebes (4) über ein elastisch verformbares Organ (10) mit dem inneren Gehäuse (3a) verbunden ist.

5. Turbotriebwerk (1) nach einem der vorstehenden Ansprüche, wobei jedes der Längsenden (18a, 18b) des mittleren Teilabschnitts (18) eine zylindrische Außenfläche (22) umfasst, auf der ein innerer Ring (24) gleitend montiert ist, der einen sphärischen Außenumfang umfasst, der geeignet ist, mit einem äußeren Ring (26) zusammenzuwirken, der von dem entsprechenden festen Teilabschnitt (14, 16) getragen wird.

6. Turbotriebwerk (1) nach Anspruch 5, wobei die zylindrische Fläche (22) mindestens eine ringförmige Nut zur Aufnahme eines ringförmigen Führungssegments (27) und/oder mindestens eine ringförmige Nut zur Aufnahme einer ringförmigen Dichtungsverbindung (29) umfasst.

7. Turbotriebwerk (1) nach Anspruch 5 oder 6, wobei der äußere Ring (26) einen ersten ringförmigen Teil (32), der an einem Ende (14a, 16b) des festen Teilabschnitts (14, 16) aufgeschrumpft ist, und einen zweiten ringförmigen Teil (34), der an diesem Ende (14a, 16b) angestückt ist, umfasst.

8. Turbotriebwerk (1) nach Anspruch 7, wobei eine ringförmige Dichtungsverbindung (36) zwischen dem ersten und zweiten Teil (32, 34) eingeschoben ist.

9. Turbotriebwerk (1) nach Anspruch 7 oder 8, wobei der zweite Teil (34) eine ringförmige Außenkante (37) zur Auflage auf einer zylindrischen Schulter (39) des Endes (14a, 16b) des festen Teilabschnitts (14, 16) mithilfe eines ringförmigen Regelungskeils (38) umfasst.

10. Turbotriebwerk (1) nach Anspruch 9, wobei eine Schraubenmutter (50), gegebenenfalls assoziiert mit einer Verriegelungsvorrichtung (52), in einem Ende (16b) des festen Teilabschnitts (16) geschraubt ist und axial auf dem zweiten Teil (34) aufliegt.

## Claims

1. An aircraft turbine engine (1), comprising a gas generator comprising at least one annular gas flow duct (2), the duct (2) being defined by two annular casings, respectively external (3b) and internal (3a), extending one around the other and connected together by at least one tubular arm (5) for the passage of a lubricating oil line (7), **characterised in that** the line (7) comprises a first fixed section (14) secured to the external casing (3b), a second fixed section (16) secured to a piece of equipment (4) of the turbine engine capable of moving or vibrating during operation relative to said casings (3a, 3b), and an intermediate section (18) connecting said first and second sections (14, 16) this intermediate section (18) having a generally elongated shape and comprising opposite longitudinal ends (18a, 18b) which are each engaged and adapted to swivel and/or slide in ends (14a, 16b) of said first and second sections (14, 16).

2. The turbine engine (1) according to claim 1, wherein the piece of equipment (4) is a mechanical reduction gearbox.

3. The turbine engine (1) according to claim 2, wherein the reduction gearbox (4) comprises a stator to which the second section (16) is attached.

4. The turbine engine (1) according to claim 3, wherein the stator of the reduction gearbox (4) is connected to the internal casing (3a) by an elastically deformable member (10).

5. The turbine engine (1) according to one of the preceding claims, wherein each of the longitudinal ends (18a, 18b) of the intermediate section (18) comprises an external cylindrical surface (22) on which is slidably mounted an internal ring (24) having a spherical external outline adapted to cooperate with an external ring (26) carried by the corresponding fixed section (14, 16).

6. The turbine engine (1) of claim 5, wherein the cylindrical surface (22) comprises at least one annular groove for receiving an annular guiding segment (27) and/or at least one annular groove for receiving an annular seal (29).

7. The turbine engine (1) according to claim 5 or 6, wherein the external ring (26) comprises a first annular portion (32) shrunk into one end (14a, 16b) of the fixed section (14, 16) and a second annular portion (34) fitted into this end (14a, 16b).

8. The turbine engine (1) according to claim 7, wherein an annular seal (36) is interposed between said first and second portions (32, 34).

9. The turbine engine (1) according to claim 7 or 8, wherein said second portion (34) comprises an external annular rim (37) for bearing on a cylindrical shoulder (39) of the end (14a, 16b) of the fixed section (14, 16), by means of an annular adjustment wedge (38).

10. The turbine engine (1) according to claim 9, wherein a nut (50), possibly associated with a locking device (52), is screwed into the end (16b) of the fixed section (16) and bears axially on the second portion (34).
